# EUROPÄISCHE PATENTSCHRIFT

(11) **EP 0 913 116 B1**
(45) Veröffentlichungstag und Bekanntmachung des Hinweises auf die Patenterteilung: **16.10.2002**
(21) Anmeldenummer: 98120526.3
(22) Anmeldetag: 30.10.1998
(51) Int. Cl.: A47L 9/24, F16L 37/084

(54) **Teleskopierbares Staubsauger-Saugrohr**
Telescopic vacuum cleaner suction hose
Tuyau d'aspiration téléscopique pour aspirateur

(30) Priorität: 03.11.1997 DE 19748371
(43) Veröffentlichungstag der Anmeldung: 06.05.1999
(73) Patentinhaber: Froh House Tech GmbH & Co. KG, 59846 Sundern (DE)
(72) Erfinder: Grote, Hartmut, 59846 Sundern (DE)
(74) Vertreter: Patentanwälte Ostriga & Sonnet

(56) Entgegenhaltungen:
- DE-B- 1 139 337
- DE-C- 19 547 721
- US-A- 2 749 153
- US-A- 2 755 107

## Beschreibung

Die Erfindung betrifft ein teleskopierbares Staubsauger-Saugrohr mit einem Außenrohr, einem mit einer sich axial erstreckenden Rastleiste versehenen Innenrohr, mindestens einem Sperrflächen aufweisenden, in Richtung einer Längsmittelachse des Staubsauger-Saugrohres bewegbaren Sperrkörper, der in mit Gegensperrflächen versehene Rasteinsenkungen der Rastleiste zeitweise eingreift, einem am Außenrohr angeordneten, teilweise das Innenrohr übergreifenden Führungsbauteil, innerhalb dessen der Sperrkörper angeordnet ist, wobei der von einem Federelement in Raststellung gehaltene Sperrkörper zumindest mittelbar über einen fingerbetätigbaren Drucktaster in die Entraststellung bewegbar ist.

Ein derartiges Staubsaugerrohr ist bereits aus der DE-PS 195 47 721 C1 bekannt, in der ein teleskopierbares Staubsauger-Saugrohr mit einem die Klemmkörper in Sperrposition formschlüssig sperrenden Verriegelungselement mit Druckknopf dargestellt und beschrieben ist. Die Verstelleinrichtung des bekannten Staubsauger-Saugrohres hat den Nachteil, daß sie relativ kompliziert aus vielen Bauteilen zusammengesetzt ist und deshalb einen hohen Herstellungs- und Montageaufwand aufweist. Auch wird die Verstelleinrichtung der Teleskoprohranordnung beim Auftreten von am Staubsauger-Saugrohr angreifenden Axialkräften nachteiligerweise stark beansprucht.

Die Aufgabe der Erfindung besteht deshalb darin, ein neues teleskopierbares Staubsauger-Saugrohr zu schaffen, welches besonders einfach und kostengünstig herzustellen sowie zu montieren ist.

Die Lösung dieser Aufgabe ergibt sich aus den Merkmalen des Anspruch 1, insbesondere den Merkmalen des Kennzeichenteils, wonach die Sperrflächen des Sperrkörpers und die Gegensperrflächen der Rasteinsenkungen im wesentlichen rechtwinklig zur Längsmittelachse des Staubsauger-Saugrohres zumindest teilweise zusammenwirkend verlaufen.

Die erfindungsgemäße Lösung hat den wesentlichen Vorteil, daß bei Einleiten von Axialkräften in die Teleskoprohr-Anordnung keine resultierenden Kräfte auf den Sperrkörper und die Verstelleinrichtung für den Sperrkörper einwirken. Dies bedeutet auf besonders vorteilhafte Weise, daß nicht nur die Führung des Sperrkörpers als auch die Verstelleinrichtung für den Sperrkörper sehr einfach und ohne große Anforderung an die Stabilität aufgebaut sein kann. Insbesondere das die Raststellung sichernde Federelement benötigt nur eine geringe Federkraft um das Sperrelement automatisch in der Sperrstellung zu halten. Keinesfalls wird die Federkraft dafür benötigt, beim Angreifen einer Axialkraft an der Teleskoprohr-Anordnung die Raststellung zu sichern.

Zwar ist aus der US-3,244,437 eine Teleskopanordnung bekannt, bei der ein Verriegelungsfortsatz im rechten Winkel zur Längsmittelachse der Rohre in eine Ausnehmung eingreift. Bei diesem nicht gattungsgemäßen heterogen Stand der Technik ist jedoch auf dem Innenrohr eine separate Rastleiste aufgesetzt und die eigentliche Betätigungsvorrichtung besteht aus einer mit dem Vorsprung verbundenen Federlasche, welche im entspannten Zustand in die Rastleiste eingreift und zum Entrasten von der Längsmittelachse der Rohre weggebogen werden muß.

Bei einer weiteren Ausgestaltung der Erfindung ist der Winkel zwischen den zusammenwirkenden Sperr-/Gegensperrflächen und der Längsmittelachse im Bereich der Selbsthemmung. Bei dieser Ausführungsform werden - was sich vorteilhaft auf die Herstellungskosten auswirkt - geringere Anforderungen an die rechtwinklige Stellung von Sperr- und Gegensperrflächen auf der einen Seite und Längsmittelachse auf der anderen Seite gestellt. Solange die Abweichung vom rechten Winkel im Bereich eines Winkels von 7 bis 8° (Bereich der Selbsthemmung) liegt, wird jegliche Kraftbeaufschlagung der Verstelleinrichtung bei Angreifen einer Axialkraft an der Teleskoprohr-Anordnung vermieden.

Bei der bevorzugten Ausführungsform der Erfindung ist der Sperrkörper mit einer Wippenkonstruktion gelenkig verbunden, auf die der Drucktaster zum Zwecke der Entrastung einwirkt. Hierbei handelt es sich um eine sehr einfache aus wenigen Teilen bestehende Verstelleinrichtung für den Sperrkörper, wobei bei einer besonders bevorzugten, wippenartigen Verstelleinrichtung zwei über eine Filmnaht am Sperrkörper angeformte Wippenarme vorhanden sind, die jeweils auf einer Drehlagerrippe angeordnet sind und die durch das Einwirken des Drucktasters auf die freien Endbereiche der Wippenarme den Sperrkörper in die Entraststellung bewegen.

Weitere Vorteile der Erfindung ergeben sich aus der nachfolgenden Beschreibung eines Ausführungsbeispiels. Es zeigen:
Fig. 1 eine Seitenansicht einer Teleskoprohr-Anordnung,
Fig. 2 eine perspektivische Ansicht auf die Teleskoprohr-Anordnung gemäß Fig. 1,
Fig. 3 eine Stirnansicht der Teleskoprohr-Anordnung gemäß Fig. 1,
Fig. 4 eine Explosionsdarstellung einer Teleskoprohr-Verstelleinrichtung,
Fig. 5 A bis C Darstellungen eines Drucktasters,
Fig. 6 A bis C Darstellungen eines Sperrkörpers,
Fig. 7 A bis D Darstellungen eines Führungsbauteils,
Fig. 8 ein Längsschnitt durch die Teleskoprohr-Anordnung im entrasteten Zustand und
Fig. 9 ein Längsschnitt durch die Teleskoprohr-Anordnung im verrasteten Zustand.

In den Zeichnungen ist eine Staubsauger-Teleskoprohr-Anordnung einschließlich Verstelleinrichtung mit der Bezugsziffer 10 bezeichnet.

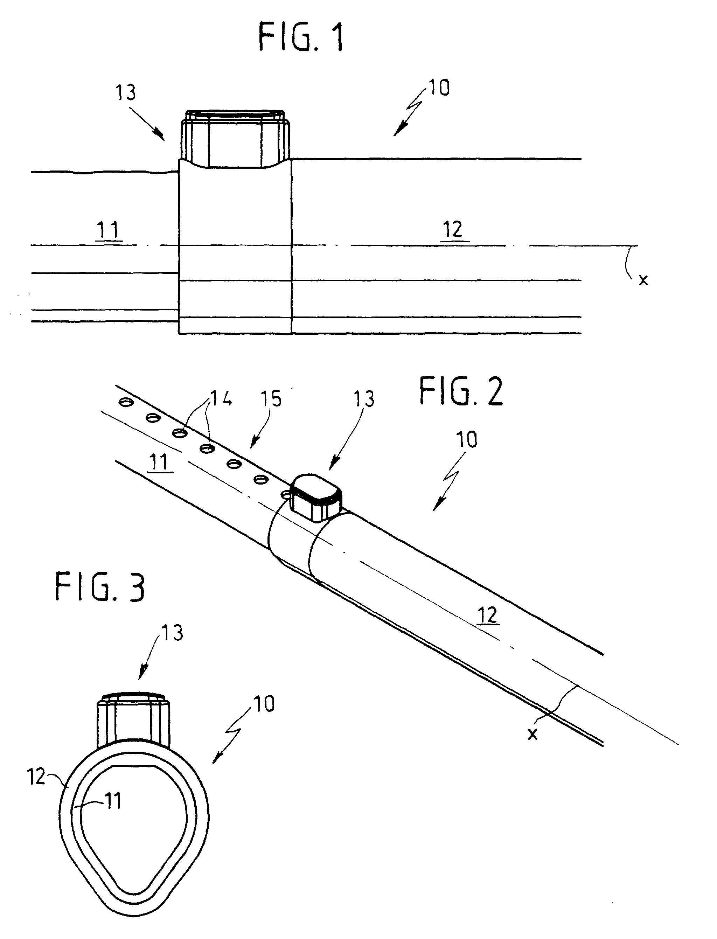

Die Teleskoprohr-Anordnung 10 weist ein Innenrohr 11, ein Außenrohr 12 und eine Verstelleinrichtung 13 auf. Das Innenrohr 11 ist mit einer aus Rasteinsenkungen 14 bestehenden Rastleiste 15 versehen. Die Rasteinsenkungen 14 weisen jeweils Gegensperrflächen G auf, die mit Sperrflächen S eines Sperrkörpers 20 zusammenwirken. Wie aus der Fig. 3 ersichtlich haben Innenrohr und Außenrohr 11, 12 im beschriebenen Ausführungsbeispiel einen "birnenförmigen" Querschnitt, wobei selbstverständlich auch andere Querschnittformen möglich sind.

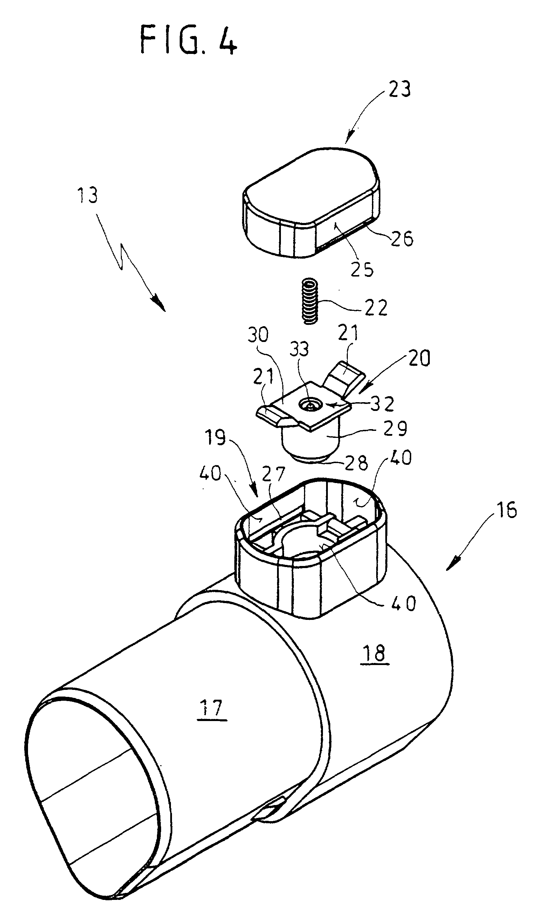

In einer Explosionsdarstellung ist in Fig. 4 die Verstelleinrichtung 13 insgesamt dargestellt. Man erkennt ein Führungsbauteil 16 mit einem Einschubbereich 17 und einem Tragbereich 18 für ein Drucktaster-Gehäuse 19. In das Drucktaster-Gehäuse ist der Sperrkörper 20 mit angeformten Wippenarmen 21 einsetzbar. Des weiteren ist eine Feder 22 und ein Drucktaster 23 dargestellt.

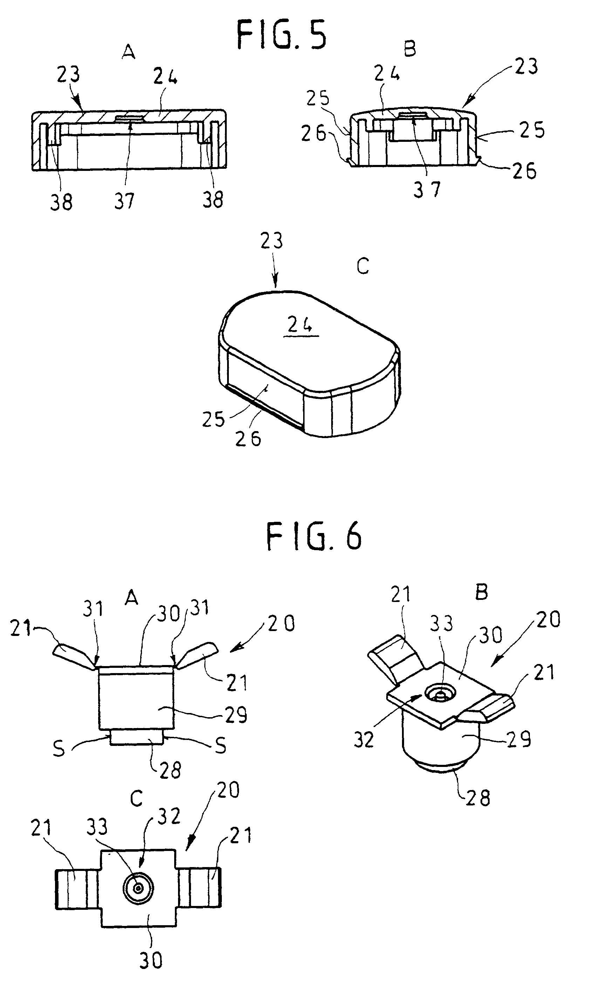

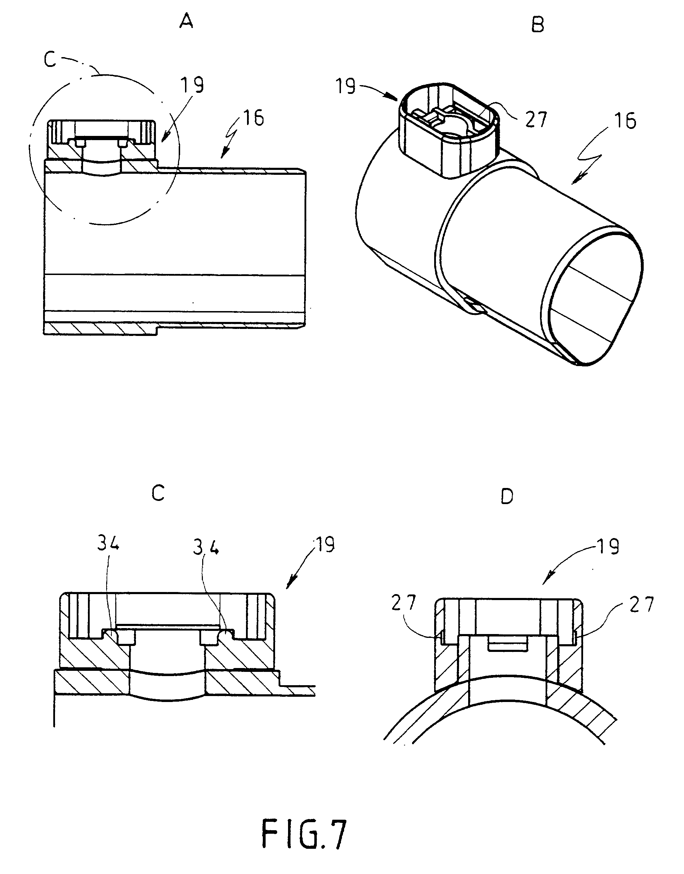

Der Drucktaster 23 ist in den Fig. 5A bis 5C im einzelnen gezeichnet. Seine äußeren Abmessungen sind so gewählt, daß die Innenumfangsflächen 40 des Drucktaster-Gehäuses 19 als Führungsflächen dienen. Auf der Oberseite des Drucktasters 23 ist eine Betätigungsfläche 24 vorhanden. Parallel zu einer Längsmittelachse x (s. Fig. 1 und 2) der Rohre 11 und 12 verlaufende Seitenflächen 25 sind mit angeformten, widerhakenförmigen Rastmitteln 26 versehen, die der unverlierbaren Verrastung des Drucktasters 23 im Drucktaster-Gehäuse 19 dienen. Beim Einführen des Drucktasters 23 in das Drucktaster-Gehäuse 19 rasten diese in Rastausnehmungen 27 (s. u.a. Fig. 7D) ein, wobei aufgrund der Abmessungen der Rastausnehmungen 27 ein Bewegungsspielraum verbleibt.

Der Sperrkörper 20 ist mit einem Sperrzapfen 28 und einem Führungszylinder 29 versehen, der oberseitig eine Abschlußplatte 30 aufweist an die seitlich gegenüberliegend je ein Wippenarm 21 über eine Filmnaht 31 angeformt ist. Die Abschlußplatte 30 weist mittig eine Einsenkung 32 mit einem Führungsdorn 33 für die Feder 22 auf.

In den Fig. 7A bis 7D ist das Führungsbauteil 16 verschiedentlich dargestellt. Man erkennt zusätzlich in den Fig. 7A und 7C angeformte Drehlagerrippen 34, an denen im zusammengebauten Zustand die Rippenarme 21 anliegen. Des weiteren sind die Rastausnehmungen 27 insbesondere in der Fig. 7b dargestellt.

Der Zusammenbau der Verstelleinrichtung 13 bzw. der Teleskoprohranordnung 10 insgesamt geschieht nun auf folgende Weise. Als erstes kann der Sperrkörper 20 in das Drucktaster-Gehäuse 19 so eingeführt werden, daß die Wippenarme 21 auf den Drehlagerrippen 34 angeordnet sind. Nach dem Aufstecken der Feder 22 auf den Führungsdorn 33 kann der Drucktaster 23 aufgesetzt werden, wobei das gegenüberliegende Ende der Feder 22 in eine Einsenkung 37 eintaucht. Entgegen der Federkraft wird der Drucktaster 23 bis zum Einrasten der Rastmittel 26 in die Rastausnehmungen 27 in Richtung zur Längsmittelachse x bewegt. Innenseitig im Drucktaster 23 angeformte Betätigungselemente 38 liegen nach der Rastverbindung von Drucktaster 25 und Drucktaster-Gehäuse 19 an freien Enden 39 der Wippenarme an. Durch Betätigung des Drucktasters 23 in Richtung zur Längsmittelachse x können die freien Enden 39 der Wippenarme 21 in Richtung zur Längsmittelachse x gedrückt werden, wobei die über Filmnähte 31 mit dem Sperrkörper 20 verbundenen Endbereiche sich entgegengesetzt bewegen und den Sperrkörper 20 aus dem Innenbereich des Außenrohres 12 herausziehen. Nunmehr ist es möglich das Innenrohr 11 in das Führungsbauteil 16 einzuschieben. Letztlich wird der Einschubbereich 17 des Führungsbauteils 16 in das Außenrohr 12 so weit eingeschoben, bis eine Anlagefläche an der Stirnfläche des Außenrohres 12 anliegt.

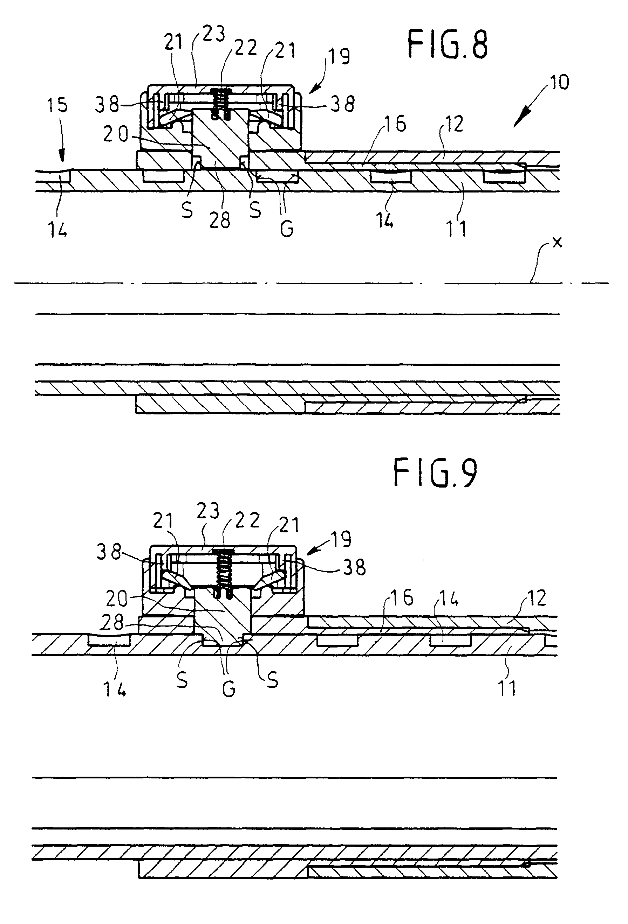

Diese Situation entspricht nun der Schnittdarstellung in Fig. 8. Falls nun das Innenrohr 11 so zum Außenrohr 12 positioniert wird, daß dem Sperrzapfen 28 gegenüberliegend eine Rasteinsenkung 14 angeordnet ist, bewegt sich der Sperrkörper 20 in Richtung zur Längsmittelachse x und es entsteht eine formschlüssige Verbindung zwischen Außen- und Innenrohr (s. Fig. 9). Zum Lösen dieser Verbindung ist lediglich das Betätigen des mit Wippenarmen 21 verbundenen Sperrkörpers 20 über den Drucktaster 23 notwendig.

Selbstverständlich ist es auch möglich, zunächst die Verstelleinrichtung 13 vollständig vorzumontieren und dann erst diese teilweise in das Außenrohr 12 einzuschieben bzw. letztlich das Innenrohr 11 anzuordnen.

## Patentansprüche

1. Teleskopierbares Staubsauger-Saugrohr (10) mit einem Außenrohr (12), einem mit einer sich axial erstrekkenden Rastleiste (15) versehenen Innenrohr (11), mindestens einem Sperrflächen (S) aufweisenden, in Richtung einer Längsmittelachse des Staubsauger-Saugrohres (10) bewegbaren Sperrkörper (20), der in mit Gegensperrflächen versehene Rasteinsenkungen (14) der Rastleiste (15) zeitweise eingreift, einem am Außenrohr (12) angeordneten, teilweise das Innenrohr (11) übergreifenden Führungsbauteil (16), innerhalb dessen der Sperrkörper angeordnet ist, wobei der von einem Federelement (22) in Raststellung gehaltene Sperrkörper (20) zumindest mittelbar über einen fingerbetätigbaren Drucktaster (23) in die Entraststellung bewegbar ist, **dadurch gekennzeichnet, daß** die Sperrflächen (S) des Sperrkörpers (20) und die Gegensperrflächen (G) der Rasteinsenkungen (14) im wesentlichen rechtwinklig zur Längsmittelachse (x) des Staubsauger-Saugrohres (10), zumindest teilweise zusammenwirkend, verlaufen.

2. Staubsauger-Saugrohr nach Anspruch 1, **dadurch gekennzeichnet, daß** der Winkel zwischen den zusammenwirkenden Sperr-/ Gegensperrflächen (S, G) und der Längsmittelachse (x) im Bereich der Selbsthemmung liegt.

3. Staubsauger-Saugrohr nach Anspruch 1 oder 2, **dadurch gekennzeichnet, daß** der Sperrkörper (20) mit einer Wippenkonstruktion gelenkig verbunden ist, auf die der Drucktaster (23) zum Zwecke der Entrastung einwirkt.

4. Staubsauger-Saugrohr nach Anspruch 3 , **dadurch gekennzeichnet, daß** die Wippenkonstruktion zwei über eine Filmnaht (31) am Sperrkörper (20) angeformte Wippenarme (21) aufweist, die jeweils auf einer Drehlagerrippe (34) angeordnet sind und daß durch das Einwirken des Drucktasters (23) auf die freien Endbereiche (39) der Wippenarme (21) der Sperrkörper (20) in die Entraststellung bewegbar ist.

5. Staubsauger-Saugrohr nach einem der vorangehenden Ansprüche, **dadurch gekennzeichnet, daß** der Sperrkörper (20) und der Drucktaster (23) innerhalb eines Drucktaster-Gehäuse (19) des Führungsbauteils (16) im wesentlichen rechtwinklig zur Längsmittelachse (x) verschiebbar angeordnet ist.

6. Staubsauger-Saugrohr nach einem der vorangehenden Ansprüche, **dadurch gekennzeichnet, daß** das Führungsbauteil (16) einen hülsenartigen, an einer Innenumfangsfläche des Außenrohres (12) anliegenden Einschubbereich (17) und einen hülsenartigen Tragbereich (18) für das Drucktaster-Gehäuse (19) aufweist.

7. Staubsauger-Saugrohr nach Anspruch 6, **dadurch gekennzeichnet, daß** der Einschub- und der Tragbereich (17, 18) des Führungsbauteils (16) insgesamt in ein in der Breite des Drucktaster-Gehäuses (19) Schlitz des Außenrohres (12) einschiebbar ist.

8. Staubsauger-Saugrohr nach Anspruch 6, **dadurch gekennzeichnet, daß** der Einschub- und der Tragbereich (17, 18) des Führungsbauteils (16) insgesamt in einer für das Drucktaster-Gehäuse (19) versehenen Ausnehmung des Außenrohres (12) einschiebbar ist und daß das Drucktaster-Gehäuse (19) im Bereich der Ausnehmung bei gleichzeitiger Veriegelung von Außenrohr (12) und Führungsbauteil (16) aufrastbar ist.

## Claims

1. A telescopic vacuum-cleaner suction pipe (10) having an outer pipe (12), an inner pipe (11) provided with an axially extending latching strip (15), at least one locking body (20), which has locking faces (S), is movable in the direction of a longitudinal centre axis of the vacuum-cleaner suction pipe (10), and at times engages in latching depressions (14) in the latching strip (15), said depressions being provided with counter locking faces, a guide component (16), which is arranged on the outer pipe (12), partially reaches over the inner pipe (11) and within which the locking body is arranged, the locking body (20), which is held in the latching position by a spring element (22), being at least indirectly movable into the unlatching position by way of a finger-activated pushbutton (23), **characterised in that** the locking faces (S) of the locking body (20) and the counter locking faces (G) of the latching depressions (14) extend substantially at a right angle to the longitudinal centre axis (x) of the vacuum-cleaner suction pipe (10) in at least partially cooperating manner.

2. A vacuum-cleaner suction pipe according to Claim 1, **characterised in that** the angle between the cooperating locking/counter locking faces (S, G) and the longitudinal centre axis (x) is in the self-locking range.

3. A vacuum-cleaner suction pipe according to Claim 1 or 2, **characterised in that** the locking body (20) is connected in articulated manner to a rocker construction, on which the pushbutton (23) acts for unlatching purposes.

4. A vacuum-cleaner suction pipe according to Claim 3, **characterised in that** the rocker construction has two rocker arms (21), which are integrally formed on the locking body (20) by way of a film seam (31) and are each arranged on a pivot bearing rib (34), and **in that** the locking body (20) is movable into the unlatching position as a result of the pushbutton (23) acting on the free end regions (39) of the rocker arms (21) of the locking body (20).

5. A vacuum-cleaner suction pipe according to one of the preceding claims, **characterised in that** the locking body (20) and the pushbutton (23) are arranged within a pushbutton housing (19) of the guide component (16) such that they are displaceable substantially at a right angle to the longitudinal centre axis (x).

6. A vacuum-cleaner suction pipe according to one of the preceding claims, **characterised in that** the guide component (16) has a sleeve-like insertion region (17), which abuts against an inner circumferential face of the outer pipe (12), and a sleeve-like supporting region (18) for the pushbutton housing (19).

7. A vacuum-cleaner suction pipe according to Claim 6, **characterised in that** the insertion and the supporting region (17, 18) of the guide component (16) may be inserted as a whole into a slot in the outer pipe (12), said slot having the width of the pushbutton housing (19).

8. A vacuum-cleaner suction pipe according to Claim 6, **characterised in that** the insertion and the supporting region (17, 18) of the guide component (16) may be inserted as a whole into a cutout in the outer pipe (12), said cutout being provided for the pushbutton housing (19), and **in that** the pushbutton housing (19) may be latched on in the region of the cutout, simultaneously locking the outer pipe (12) and the guide component (16).

## Revendications

1. Tuyau d'aspiration pour aspirateur à poussières (10) télescopique, comportant un tube extérieur (12), un tube intérieur (11) muni d'une bande d'encliquetage (15) s'étendant axialement, d'au moins un corps de blocage (20) présentant des faces de blocage (S), déplaçable dans la direction de l'axe longitudinal du tuyau d'aspiration pour aspirateur à poussières (10), corps de blocage qui s'engage par moments dans des cavités d'encliquetage (14), munies de face de blocage conjuguée, de la bande d'encliquetage (15), un composant de guidage (16) disposé sur le tube extérieur (12), entourant partiellement le tube intérieur (11), composant de guidage à l'intérieur duquel est disposé le corps de blocage, le corps de blocage (20), maintenu à la position d'encliquetage par un élément élastique (22), étant déplaçable au moins indirectement à la position d'encliquetage, par l'intermédiaire d'un bouton-poussoir (23) actionnable par un doigt, **caractérisé en ce que** les faces de blocage (S) du corps de blocage (20) et les faces de blocage conjuguées (G) des cavités d'encliquetage (14) s'étendent, en coopérant au moins partiellement, sensiblement perpendiculairement à l'axe longitudinal (x) du tuyau d'aspiration pour aspirateur à poussières.

2. Tuyau d'aspiration pour aspirateur à poussières selon la revendication 1, **caractérisé en ce que** l'angle entre les faces de blocage/faces de blocage conjuguées (S, G) qui coopèrent, et l'axe longitudinal (x) est dans la fourchette des angles qui assurent un auto-blocage.

3. Tuyau d'aspiration pour aspirateur à poussières selon la revendication 1 ou 2, **caractérisé en ce que** le corps de blocage (20) est relié, de façon articulée, à une construction à bascule sur laquelle le bouton-poussoir (23) agit dans le but du désencliquetage.

4. Tuyau d'aspiration pour aspirateur à poussières selon la revendication 3, **caractérisé en ce que** la construction à bascule présente deux bras de bascule (21) formés d'un seul tenant sur le corps de blocage (20) par l'intermédiaire d'un cordon en film (31), les bras étant disposés chacun sur une nervure formant palier de rotation (34) et **en ce que** le corps de blocage (20) est déplaçable à la position de désencliquetage, suite à l'effet du bouton-poussoir (23) sur les zones d'extrémité (39) libres des bras de bascule (21).

5. Tuyau d'aspiration pour aspirateur à poussières selon l'une des revendications précédentes, **caractérisé en ce que** le corps de blocage (20) et le bouton-poussoir (23) sont disposés de façon déplaçable sensiblement perpendiculairement par rapport à l'axe longitudinal (x), à l'intérieur d'un boîtier de bouton-poussoir (19) du composant de guidage (16).

6. Tuyau d'aspiration pour aspirateur à poussières selon l'une des revendications précédentes., **caractérisé en ce que** le composant de guidage (16) présente une zone d'insertion (17), du genre d'une douille, s'appliquant sur une face périphérique intérieure du tube extérieur (12), et une zone support (18) du genre d'une douille, pour le boîtier de bouton-poussoir (19).

7. Tuyau d'aspiration pour aspirateur à poussières selon la revendication 6, **caractérisé en ce que** la zone d'insertion et la zone support (17, 18) du composant de guidage (16) sont globalement susceptible d'être insérées dans une fente, ayant la largeur du boîtier de bouton-poussoir (19), du tube extérieur (12).

8. Tuyau d'aspiration pour aspirateur à poussières selon la revendication 6, **caractérisé en ce que** la zone d'insertion et la zone support (17, 18) du composant de guidage (16) sont globalement susceptibles d'être insérées dans un évidemment, prévu pour le boîtier de bouton-poussoir (19), du tube extérieur (12), et **en ce que** le boîtier de bouton-poussoir (19) est susceptible d'être rapporté par encliquetage dans la zone de l'évidement avec verrouillage simultané du tube extérieur (12) et du composant de guidage (16).
